# EUROPÄISCHE PATENTSCHRIFT

(11) **EP 1 248 718 B1**
(45) Veröffentlichungstag und Bekanntmachung des Hinweises auf die Patenterteilung: **27.02.2008**
(21) Anmeldenummer: 01978141.8
(22) Anmeldetag: 14.09.2001
(51) Int. Cl.: B60S 1/52, B05B 9/03

(54) **DÜSENEINRICHTUNG UND VERFAHREN ZUM BETREIBEN EINER DÜSENEINRICHTUNG**
NOZZLE DEVICE AND METHOD FOR OPERATING A NOZZLE DEVICE
DISPOSITIF A BUSE ET PROCEDE PERMETTANT DE FAIRE FONCTIONNER CE DISPOSITIF A BUSE

(30) Priorität: 28.10.2000 DE 10053684
(43) Veröffentlichungstag der Anmeldung: 16.10.2002
(73) Patentinhaber: ROBERT BOSCH GMBH, 70442 Stuttgart (DE)
(72) Erfinder: ZIMMER, Joachim, 77880 Sasbach (DE)
(74) Vertreter: Grosse, Rainer
(86) Internationale Anmeldenummer: PCT/DE2001/003524
(87) Internationale Veröffentlichungsnummer: WO 2002/034598

(56) Entgegenhaltungen:
- EP-A- 0 667 267
- WO-A-00/56584
- DE-A- 19 739 457
- FR-A- 2 585 311
- US-A- 5 695 120

## Beschreibung

Die Erfindung betrifft eine Düseneinrichtung mit einem ersten Kanal, einer dem ersten Kanal zugeordneten ersten Öffnung, einer dem ersten Kanal zugeordneten zweiten Öffnung und einer dem ersten Kanal zugeordneten Spritzöffnung. Die Erfindung betrifft ferner ein System mit mehreren Düseneinrichtungen sowie ein Verfahren zum Betreiben einer Düseneinrichtung mit einem ersten Kanal, einer dem ersten Kanal zugeordneten ersten Öffnung, einer dem ersten Kanal zugeordneten zweiten Öffnung und einer dem ersten Kanal zugeordneten Spritzöffnung, bei dem Flüssigkeit durch den ersten Kanal gefördert wird.

### Stand der Technik

Bekannte Düseneinrichtungen werden beispielsweise verwendet, um eine Reinigungsflüssigkeit auf Kraftfahrzeugscheiben zu spritzen. Die Düsen sind häufig an der Fahrzeughaube oder im Wischerarm integriert. Im Allgemeinen wird die Reinigungsflüssigkeit, beispielsweise ein Wasser-Alkohol-Gemisch oder reines Wasser aus einem Waschwasserbehälter über eine Pumpe zur Düse gepumpt.

Die US 5,695,120 offenbart eine Spritzpistole, bei der ein Rückführungskanal für Flüssigkeit vorgesehen ist. Durch den Rückführungskanal soll eine Stagnation der Wasserzirkulation bei geschlossener Düse beziehungsweise bei längerer Nichtbenutzung der Spritzpistole vermeiden. Dabei wird die Flüssigkeit zunächst durch einen Zuführungskanal zu der Düse geführt, durch diese hindurch und anschlie-βend durch den Rückführungskanal aus ihr hinausgeleitet.

Die WO 00/56584 offenbart eine Spritzdüse, die lösbar an einem Halteelement befestigt ist und einen Kanal mit einer ersten Öffnung, einer zweiten Öffnung und einer Spritzöffnung aufweist.

Die EP-A-1334015 (WO-A-01/85500), die eine Düseneinrichtung offenbart, durch die eine Flüssigkeit im Umwälzbetrieb geleitet wird, fällt unter Artikel 54 (3) und (4) EPÜ und ist somit für die Frage der erfinderischen Tätigkeit nicht von Bedeutung.

Bei bekannten Düseneinrichtungen kommt es häufig zu witterungsbedingten Problemen. Im Winter neigen die Düsen zum Einfrieren. Es wurde daher bereits vorgeschlagen, die Düsen zu beheizen. Durch die Beheizung der Düsen verdunstet das Waschwasser allerdings schneller, so dass es bei der Verwendung von herkömmlichem Leitungswasser zu einer schnelleren Verkalkung der Düse kommt. Dem Problem der Verkalkung sowie dem Problem des Nachtropfens der Düse nach dem eigentlichen Spritzvorgang kann man dadurch begegnen, dass man eine mit einem Ventil ausgestattete Düse verhindert.

### Vorteile der Erfindung

Die Erfindung sieht einen zweiten Kanal, der eine dritte Öffnung und eine vierte Öffnung aufweist, und mindestens einen Heizdraht vor, wobei während eines Umwälzzyklus eine beheizte Flüssigkeit zunächst durch einen der Kanäle und anschließend durch den anderen Kanal geleitet wird und somit zweimal Wärme an die Düseneinrichtung abgibt. Es liegt somit eine Düse mit zwei Kanälen vor. Daher ist ein Durchströmen der Düse in unterschiedliche Richtungen möglich. Folglich kann die Flüssigkeit in einem Umwälzbetrieb durch die Düse geleitet werden. Eine beheizte Flüssigkeit kann somit während eines Umwälzzyklus zweimal durch dieselbe Düse geleitet werden, wodurch die Wärmeenergie der Flüssigkeit effizient genutzt wird. Die durch die Düsenkanäle verlaufenden Heizdrähte unterstützen die Erwärmung der Düse und somit das Auftauen, und sie verhindern ein Einfrieren.

Vorzugsweise ist die Spritzöffnung mit dem ersten Kanal über ein Ventil verbunden. Ein Ventil verhindert das Nachtropfen der Düse. Dies ist insbesondere dann sinnvoll, wenn die Düse im beweglichen Wischerarm eines Scheibenwischersystems integriert ist. Ferner verhindert das Ventil ein übermäßiges Abdampfen von Wasser durch die Düse und somit eine vorzeitige Verkalkung sowie eine entsprechende Funktionsbeeinträchtigung.

Besonders vorteilhaft ist es, wenn das Ventil ein Membranventil ist. Ein Membranventil ist besonders nützlich, da es sich über den Druck in der Düse steuern lässt, so dass keine weiteren Steuerungselemente erforderlich sind.

Vorzugsweise ist die Membran des Membranventils konisch geformt. Hierdurch ist es möglich, den Bauraum des Ventils zu verringern, so dass eine Integration der Düse an verschiedensten Stellen des Kraftfahrzeuges ermöglicht wird.

Es ist von besonderem Vorteil, wenn ein Düsenkörper und ein Düsengehäuse voneinander trennbar sind. Die Düse lässt sich so auf einfache Weise zusammenbauen, indem zunächst die Membran über den Düsenkörper gezogen wird und nachher das Düsengehäuse auf den Düsenkörper aufgesetzt wird. Die Membran stützt sich dann an dem Düsengehäuse ab.

Vorzugsweise hat das Düsengehäuse eine Entlüftungsöffnung. Dies ist im Sinne eines zuverlässigen Betriebs des Membranventils, da auf diese Weise der Öffnungsdruck und der Schließdruck des Membranventils durch die Elastizität der Membran bestimmt werden.

Bevorzugt ist der Öffnungsdruck des Membranventils größer als ein Betriebsdruck. Liegt also in der Düseneinrichtung ein normaler Betriebsdruck vor, so strömt zwar Flüssigkeit durch den ersten Kanal und den zweiten Kanal, wobei die Düseneinrichtung erwärmt wird. Die Membran verhindert jedoch ein Öffnen des Ventils.

Ebenfalls ist es vorteilhaft, dass der Schließdruck des Membranventils größer ist als ein Betriebsdruck. Nach dem Spritzvorgang der Düse ist es vorteilhaft, wenn die Membran wieder sicher schließt. Da nach dem Spritzvorgang der Druck in den Kanälen der Düseneinrichtung auf den Betriebsdruck herunter gefahren wird, ist ein Schließdruck, welcher höher ist als der Betriebsdruck im Sinne eines sicheren Schließverhaltens.

Es ist von besonderem Vorteil, dass eine dem ersten Kanal zugeordnete Öffnung und eine dem zweiten Kanal zugeordnete Öffnung mit einem Schlauch verbunden sind und dass der Schlauch zwei Kanäle hat, welche jeweils mit dem ersten Kanal oder dem zweiten Kanal verbunden sind. Die Reinigungsflüssigkeit, welche einem bestimmten Kanal der Düseneinrichtung zugeführt wird, kommt also aus einem bestimmten Kanal eines Schlauches, beziehungsweise sie wird durch einen bestimmten Kanal eines Schlauches abgeführt, so dass die Düsenkanäle gezielt mit Flüssigkeit einer bestimmten Strömungsrichtung beschickt werden können.

Vorzugsweise ist der erste Kanal der Düseneinrichtung mit dem zweiten Kanal der Düseneinrichtung verbunden. Durch diese Verbindung ist es möglich, beispielsweise von einer Pumpe erwärmtes Wasser durch den ersten Kanal zu leiten, dieses nach dem Verlassen des ersten Kanals umzuwälzen und durch den zweiten Kanal zurückzuleiten.

Besonders vorteilhaft kann es sein, dass eine dem ersten Kanal zugeordnete Öffnung und eine dem zweiten Kanal zugeordnete Öffnung über eine Abschlusskappe miteinander verbunden sind. Das Wasser wird nach dem Austreten aus einer der Öffnungen also durch die Wirkung der Abschlusskappe unmittelbar in den anderen Kanal geleitet. Die Düseneinrichtung kann somit als Enddüse eines Systems dienen.

Es ist von besonderem Vorteil, wenn eine Pumpe vorgesehen ist, mittels welcher mindestens zwei Druckstufen erzeugbar sind. Die erste Druckstufe dient lediglich dazu, Reinigungsflüssigkeit durch den ersten Kanal und den zweiten Kanal der Düseneinrichtung zirkulieren zu lassen. Wird auf die zweite Druckstufe umgeschaltet, wobei nun ein höherer Druck vorliegt, öffnet das Ventil der Düse, und es findet ein Spritzvorgang statt. Beim Erniedrigen des Druckes auf die erste Druckstufe schließt das Düsenventil, und der Spritz-vorgang wird sicher beendet. Durch eine Pumpe mit mindestens zwei Druckstufen kann somit eine Steuerung des Ventils erfolgen, ohne dass zusätzliche Steuereinrichtungen am Düsenventil erforderlich wären.

Es ist von besonderem Vorteil, dass ein beheizbarer Flüssigkeitsbehälter vorgesehen ist. Es wird somit eine Reinigungsflüssigkeit von vornherein im beheizten Zustand zur Verfügung gestellt. Eine Kombination mit Heizelementen, wie etwa die durch die Kanäle verlaufenden Heizdrähte, ist aber dennoch nützlich.

Die Erfindung ist dadurch besonders vorteilhaft, dass ein System vorgesehen ist, welches mehrere Düseneinrichtungen aufweist. Beispielsweise können mehrere Düseneinrichtungen durch Schläuche miteinander verbunden sein und in einem Wischerarm integriert sein. Die Düseneinrichtung lässt sich somit in einem modularen Aufbau verwenden, was eine besondere Flexibilität im Hinblick auf zahlreiche Einsatzgebiete zur Folge hat.

Das erfindungsgemäße Verfahren sieht vor, dass die Flüssigkeit weiterhin durch einen zweiten Kanal gefordert wird, welcher eine dritte und eine vierte Öffnung aufweist, wobei die Flüssigkeit in der Düseneinrichtung erwärmt wird und während eines Umwälzzyklus beheizte Flüssigkeit zunächst durch einen der Kanäle und anschlie-ßend durch den anderen Kanal geleitet wird und somit zweimal Wärme an die Düseneinrichtung abgibt. Es ist somit ein Durchströmen der Düse in unterschiedliche Richtungen möglich. Folglich kann die Flüssigkeit in einem Umwälzbetrieb durch die Düse geleitet werden. Eine beheizte Flüssigkeit kann somit während eines Umwälzzyklus zweimal durch dieselbe Düse geleitet werden, wodurch die Wärmeenergie der Flüssigkeit effizient genutzt wird. Die Erwärmung der Flüssigkeit in der Düseneinrichtung kann beispielsweise durch Heizdrähte erfolgen, welche durch die Düsenkanäle hindurchlaufen.

Vorzugsweise wird die Flüssigkeit in einem ersten Betriebszustand mit einem Betriebsdruck gefördert, so dass keine Flüssigkeit aus der Spritzöffnung austritt, und die Flüssigkeit wird in einem zweiten Betriebszustand mit einem Spritzdruck gefördert, so dass Flüssigkeit aus der Spritzöffnung austritt. Das Austreten von Flüssigkeit aus der Spritzdüse kann somit allein über einen Druck gesteuert werden, welcher in dem System vorliegt. Daher sind keine weiteren Mittel zur Steuerung erforderlich. Verwendet man ein Membranventil als Auslassventil der Düse, so ist die Drucksteuerung in einfacher Weise realisierbar.

In einer bevorzugten Ausführungsform tritt die Flüssigkeit durch die vierte Öffnung in den zweiten Kanal ein, die Flüssigkeit tritt durch die dritte Öffnung aus dem zweiten Kanal aus, die Flüssigkeit tritt durch die erste Öffnung in den ersten Kanal ein, und die Flüssigkeit tritt durch die zweite Öffnung aus dem ersten Kanal aus. Es ist also möglich, dass zuerst der zweite Kanal von der Reinigungsflüssigkeit durchströmt wird und die Flüssigkeit danach durch den ersten Kanal hindurchtritt.

Es kann aber auch nützlich sein, dass die Flüssigkeit durch die zweite Öffnung in den ersten Kanal eintritt, dass die Flüssigkeit durch die erste Öffnung aus dem ersten Kanal austritt, dass die Flüssigkeit durch die dritte Öffnung in den zweiten Kanal eintritt und dass die Flüssigkeit durch die vierte Öffnung aus dem zweiten Kanal austritt. Bei dieser Konfiguration durchströmt die Flüssigkeit zuerst den ersten Kanal, das heißt den Verteilerkanal. Bei geeigneter Wahl der Drücke in dem System muss beim Montieren der Düse also nicht darauf geachtet werden, welcher Kanal der Düse zuerst durchströmt wird.

Es ist von besonderem Vorteil, wenn die Flüssigkeit durch eine Abschlusskappe von einem Kanal in den anderen geleitet wird. Das Wasser wird nach dem Austreten aus einer der Öffnungen also durch die Wirkung der Abschlusskappe unmittelbar in den anderen Kanal geleitet. Die Düseneinrichtung kann somit als Enddüse eines Systems dienen.

Vorzugsweise wird die Flüssigkeit nach dem Austritt aus einem Kanal durch weitere Komponenten geleitet, und danach tritt sie in den anderen Kanal ein. Es ist also möglich, mehrere hintereinander geschaltete Düseneinrichtungen mit demselben Verfahren zu betreiben.

Die Düseneinrichtung ist variabel einsetzbar und vorzugsweise so ausgelegt, dass die Heizdrähte durch die Düsenkanäle hindurchgefädelt werden können. Ebenfalls ist es besonders nützlich, wenn die Spritzdüse einstellbar ausgeführt ist. Die erfindungsgemäße Düse ist beispielsweise in einem Wischerarm integrierbar oder auch auf einer Haube montierbar.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine Schnittansicht einer vorteilhaften Düseneinrichtung;
- Figur 2: eine Schnittansicht des Anschlussbereiches einer vorteilhaften Düseneinrichtung;
- Figur 3: eine Schnittansicht einer teilweise zerlegten vorteilhaften Düseneinrichtung;
- Figur 4: eine Schnittansicht einer teilweise zerlegten vorteilhaften Düseneinrichtung;
- Figur 5: eine Schnittansicht einer teilweise zerlegten vorteilhaften Düseneinrichtung;
- Figur 6: eine Schnittansicht mit zwei vorteilhaften Düseneinrichtungen;
- Figur 7: eine Schnittansicht mit zwei vorteilhaften Düseneinrichtungen; und
- Figur 8: eine Schnittansicht mit zwei erfindungsgemäßen Düseneinrichtungen.

### Beschreibung der Ausführungsbeispiele

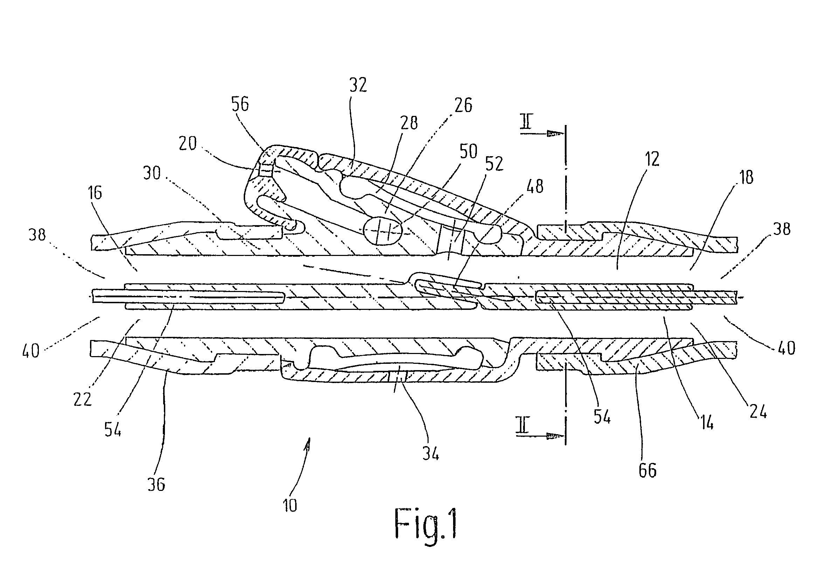

In Figur 1 ist eine Schnittansicht einer vorteilhaften Düseneinrichtung 10 dargestellt. Die Düseneinrichtung 10 hat einen ersten Kanal 12 und einen zweiten Kanal 14. Der erste Kanal 12 hat eine erste Öffnung 16 und eine zweite Öffnung 18. Der zweite Kanal 14 hat eine dritte Öffnung 22 und eine vierte Öffnung 24. Ferner ist an dem ersten Kanal 12 eine Spritzöffnung 20 vorgesehen. Die Spritzöffnung 20 ist mit dem ersten Kanal 12 über ein Ventil 26 verbunden. Das Ventil 26 ist als Membranventil mit konischer Membran 28 ausgelegt. Die Membran 28 verschließt im geschlossenen Zustand des Ventils 26 die Ventilbohrung 52, so dass keine Flüssigkeit aus dem ersten Kanal 12 durch die Ventilbohrungen 50, 52 zur Spritzöffnung 20 gelangt. Im Bereich der Spritzöffnung 20 ist ferner eine Düsenkappe 56 vorgesehen. Die Membran 28 stützt sich an einem Düsengehäuse 32 ab. Das Düsengehäuse 32 sitzt auf dem Düsenkörper 30. In dem Düsengehäuse ist eine Entlüftungsöffnung 34 vorgesehen. Ferner sind zur Abdichtung des ersten Kanals 12 gegen den zweiten Kanal 14 Dichtflächen 48 vorgesehen. Auf dem Düsenkörper 30 sitzt ein erster Schlauch 36. Der Schlauch 36 hat zwei Kanäle 38, 40. Die Verbindung des Schlauches 36 mit der Düseneinrichtung 10 erfolgt so, dass ein Kanal 38 des Schlauches dem ersten Düsenkanal 12 zugeordnet ist, während der andere Kanal 40 des Schlauches dem zweiten Düsenkanal 14 zugeordnet ist. Die Kanäle bleiben durch einen Aufnahmeschlitz 54, in welchen ein entsprechendes Gegenstück des Schlauches 36 eindringt, voneinander getrennt. In ähnlicher Weise ist ein zweiter Schlauch 66 mit einem ersten Kanal 38 und einem zweiten Kanal 40 auf das Düsengehäuse 32 aufgesteckt.

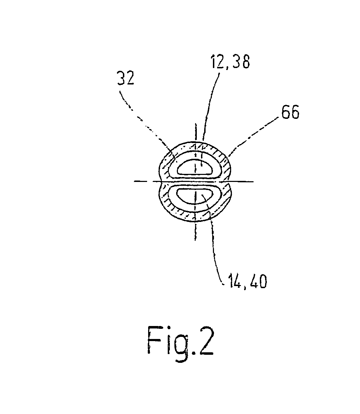

In Figur 2 ist der Anschlussbereich der Schläuche 36, 66 an dem Düsenkörper 30 beziehungsweise dem Düsengehäuse 32 veranschaulicht. Es ist eine Schnittansicht entlang der in Figur 1 durch die Linie II-II gekennzeichneten Schnittebene dargestellt. Es ist also beispielhaft der auf das Düsengehäuse 32 aufgesteckte Schlauch 66 gezeigt, wobei die Verbindung des Düsenkörpers 30 mit dem Schlauch 36 in vergleichbarer Weise erfolgt. Es ist erkennbar, dass der Schlauch 66 zwei Kanäle 38, 40 hat, so dass er im Querschnitt eine Form hat, die an eine Acht erinnert. Wird der Schlauch 66 auf das Düsengehäuse 32 aufgesteckt, so dringt der Verbindungssteg der "Acht" in die in Figur 1 dargestellten Aufnahmeschlitze 54 ein. Somit werden die Kanäle 38, 40 des Schlauchs jeweils mit den entsprechenden Kanälen 12, 14 der Düseneinrichtung verbunden.

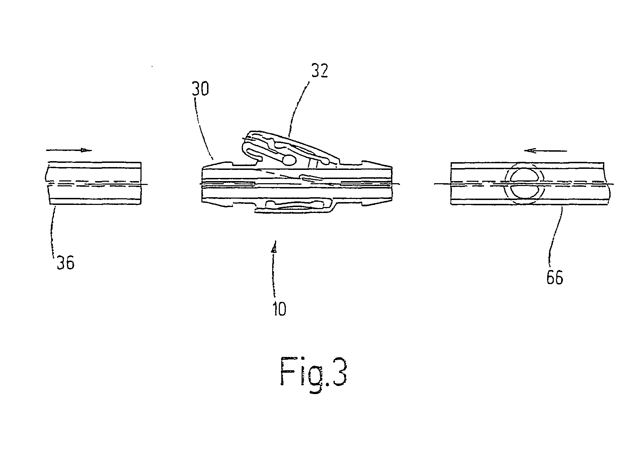

Figur 3 veranschaulicht ebenfalls das Aufstecken der Schläuche 36, 66 auf den Düsenkörper 30 beziehungsweise das Düsengehäuse 32 der Düseneinrichtung 10. Die Schläuche werden in Richtung der Pfeile auf die Düseneinrichtung 10 aufgesetzt, wobei im Schlauch 66 der Schlauchquerschnitt im nicht aufgesteckten Zustand angedeutet ist.

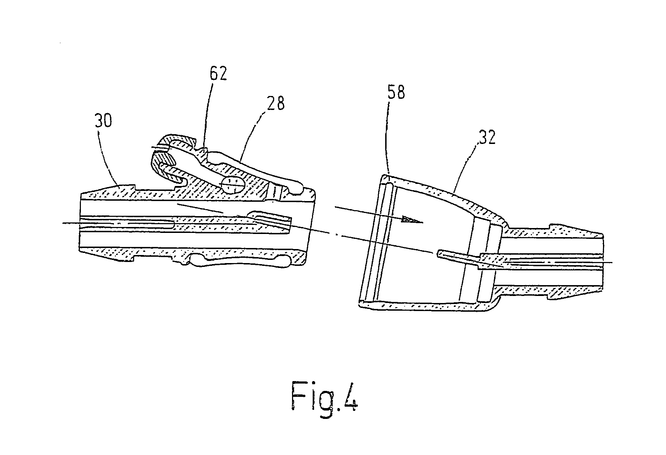

In Figur 4 ist eine weitere Schnittansicht einer vorteilhaften Düseneinrichtung gezeigt, wobei hier das Düsengehäuse von dem Düsenkörper abgenommen ist. Beim Aufstecken des Düsengehäuses 32 auf den Düsenkörper 30 rastet ein Fortsatz 62 des Düsenkörpers 30 in eine Ausnehmung 58 des Düsengehäuses 32 ein. Im eingerasteten Zustand stützt sich die Membran 28 am Düsengehäuse 32 ab.

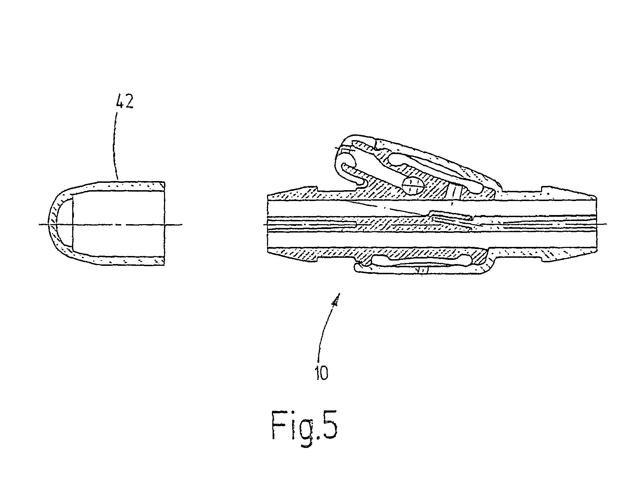

In Figur 5 sind eine Schnittansicht einer Düseneinrichtung 10 sowie eine Schnittansicht einer Abschlusskappe 42 dargestellt. Die Abschlusskappe 42 kann alternativ zu einem Schlauch auf die Düseneinrichtung 10 aufgesetzt werden. Eine Abschlusskappe 42 kann sowohl auf den Düsenkörper 30 als auch auf das Düsengehäuse 32 aufgesetzt werden.

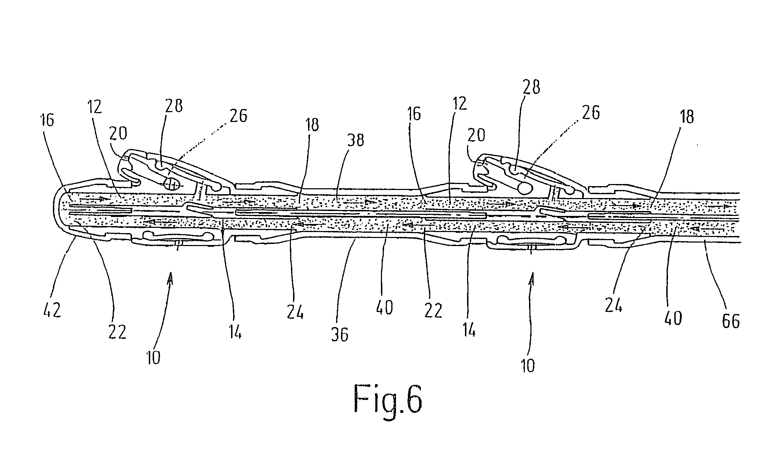

In Figur 6 ist eine Anordnung mit zwei Düseneinrichtungen 10 im Betrieb dargestellt. Auf das Düsengehäuse 32 der rechten Düseneinrichtung 10 ist ein Schlauch 66 aufgesteckt. Auf den Düsenkörper 30 der rechten Düseneinrichtung 10 ist ein weiterer Schlauch 36 aufgesteckt. Das andere Ende des Schlauches 36 ist auf das Düsengehäuse 32 der linken Düseneinrichtung 10 gesteckt. Auf den Düsenkörper 30 der linken Düseneinrichtung 10 ist eine Abschlusskappe 42 aufgesetzt.

Im vorliegenden Beispiel gemäß Figur 6 strömt eine Flüssigkeit durch den unteren Kanal des Schlauches 66 in den zweiten Kanal 14 der rechten Düseneinrichtung 10 ein. Die Flüssigkeit tritt aus der Öffnung 22 des zweiten Kanals aus und strömt dann durch den unteren Kanal 40 des Schlauches 36. An der anderen Seite des Schlauches 36 strömt die Flüssigkeit durch eine Öffnung 24 des zweiten Kanals 14 der linken Düseneinrichtung 10 in diese ein. Nach dem Durchströmen des zweiten Kanals der linken Düseneinrichtung 10 strömt die Flüssigkeit aus dem zweiten Kanal 14 durch die Öffnung 22 aus. Die Flüssigkeit wird von der Abschlusskappe 42 der linken Düseneinrichtung 10, welche als Enddüse installiert ist, umgelenkt und in den ersten Kanal 12 der linken Düseneinrichtung 10 durch die Öffnung 16 eingeleitet. Nach dem Durchströmen des ersten Kanals 12 der Enddüseneinrichtung 10 verlässt die Flüssigkeit durch die Öffnung 18 den ersten Kanal 12 der Enddüseneinrichtung 10 und durchströmt den oberen Kanal 38 des Schlauches 36. Aus dem Schlauch 36 strömt die Flüssigkeit durch die Öffnung 16 des ersten Kanals 12 der rechten Düseneinrichtung 10, weiche als Zwischendüse installiert ist, in diese ein und verlässt nach dem Durchströmen des Kanals 12 diesen wieder durch die Öffnung 18. Die Flüssigkeit kann somit in den Vorratsbehälter zurückgeführt werden, so dass insgesamt ein Umwälzbetrieb vorliegt. Die bislang im Zusammenhang mit Figur 6 beschriebenen Vorgänge finden bei einem Betriebsdruck einer Förderpumpe statt. Es ist nützlich, wenn der Öffnungsdruck der Membranen 28 größer ist als der Betriebsdruck, damit die Membranen 28 während des normalen Umwälzbetriebes verhindern, dass Flüssigkeit aus den Düseneinrichtungen austritt. Erst wenn der Betriebsdruck erhöht wird, beispielsweise auf eine zweite vorbestimmte Druckstufe, können die Membranen 28 einen Weg durch das Ventil 26 freigeben, so dass die Spritzöffnungen 20 Flüssigkeit austreten lassen. Wenn der Spritzvorgang beendet werden soll, wird der Druck in dem System wieder auf Betriebsdruck erniedrigt, und die Membranen 28 verschließen die Ventile 26. Hierfür ist es nützlich, dass der Schließdruck der Membranen 28 höher ist als der Betriebsdruck, so dass das Schließen in sicherer Weise veranlasst wird.

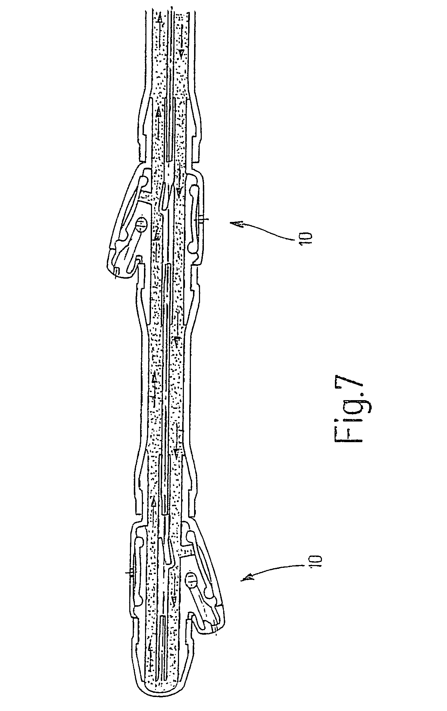

In Figur 7 ist ein System dargestellt, welches weitgehend dem System gemäß Figur 6 entspricht. Bezüglich der Gemeinsamkeiten wird daher auf Figur 6 verwiesen. Im Unterschied zu Figur 6 ist jedoch die Enddüse 10 um 180° um die Längsachse des Systems gedreht. Die Flüssigkeit durchströmt also zunächst den ersten Kanal 12 der Enddüse 10 und danach den zweiten Kanal 14 der Enddüse 10. Wählt man den Öffnungsdruck und den Schließdruck der Membranen 28 in Bezug auf die Druckstufen der Förderpumpe in geeigneter Weise, so sind sowohl Montagezustände gemäß Figur 7 als auch Montagezustände gemäß Figur 6 möglich. Dies erhöht die Variabilität im Hinblick auf die Spritzrichtungen. Ferner muss bei der Montage nicht auf die Lage eines Schlauchs relativ zur Düseneinrichtung geachtet werden.

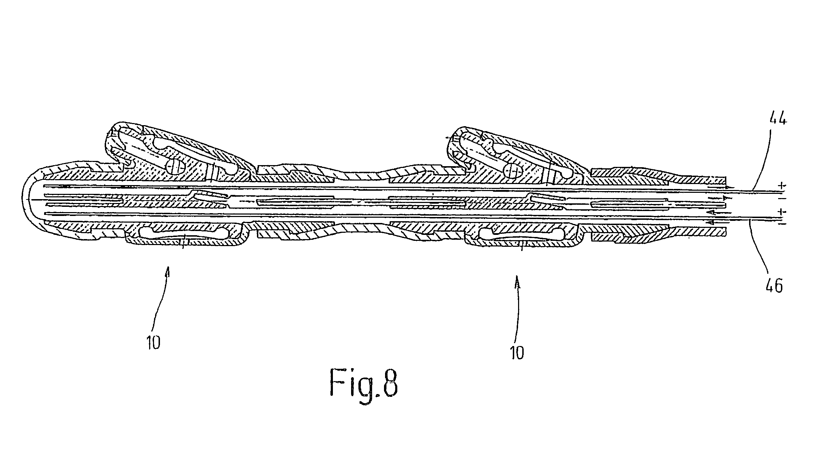

In Figur 8 ist eine Düseneinrichtung dargestellt, welche derjenigen aus Figur 6 entspricht. Im Hinblick auf die Gemeinsamkeiten wird daher auf Figur 6 verwiesen. Zusätzlich sind in Figur 8 Heizdrähte 44, 46 vorgesehen, um die Beheizung der Düsen auf diese Weise zu unterstützen. Die Ausführungsform gemäß Figur 8 kann insbesondere im Hinblick darauf nützlich sein, dass die geringen Wassermengen, welche durch die Düseneinrichtungen 10 fließen, sehr rasch erwärmbar sind. Beim Kaltstart eines Fahrzeugs und bei kaltem Waschwasservorratsbehälter kann somit ein rasches Auftauen der Düsen erfolgen. Nachdem der Waschwasserbehälter erwärmt ist, ist es denkbar, die Heizdrähte 44, 46 außer Betrieb zu setzen.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Düseneinrichtung mit
- einem ersten Kanal (12).
- einer dem ersten Kanal (12) zugeordneten ersten Öffnung (16),
- einer dem ersten Kanal (12) zugeordneten zweiten Öffnung (18),
- einer dem ersten Kanal (12) zugeordneten Spritzöffnung (20) und
- einem zweiten Kanal (14),
- wobei der zweite Kanal (14) eine dritte Öffnung (22) und eine vierte Öffnung (24) aufweist,
- und mit mindestens einem Heizdraht (44, 46),
- wobei während eines Umwälzzyklus eine beheizte Flüssigkeit zunächst durch einen der Kanäle (12, 14) und anschließend durch den anderen Kanal (14, 12) geleitet wird und somit zweimal Wärme an die Düseneinrichtung abgibt.

2. Düseneinrichtung nach Anspruch 1, **dadurch gekennzeichnet, dass** die Spritzöffnung (20) mit dem ersten Kanal (12) über ein Ventil (26) verbunden ist.

3. Düseneinrichtung nach Anspruch 1 oder 2, **dadurch gekennzeichnet, dass** das Ventil (26) ein Membranventil ist.

4. Düseneinrichtung nach einem der vorangehenden Ansprüche, **dadurch gekennzeichnet, dass** die Membran (28) des Membranventils konisch geformt ist.

5. Düseneinrichtung nach einem der vorangehenden Ansprüche, **dadurch gekennzeichnet, dass** ein Düsenkörper (30) und ein Düsengehäuse (32) voneinander trennbar sind.

6. Düseneinrichtung nach einem der vorangehenden Ansprüche, **dadurch gekennzeichnet, dass** das Düsengehäuse (32) eine Entlüftungsöffnung (34) aufweist.

7. Düseneinrichtung nach einem der vorangehenden Ansprüche, **dadurch gekennzeichnet, dass** der Öffnungsdruck des Membranventils (26) größer ist als ein Betriebsdruck.

8. Düseneinrichtung nach einem der vorangehenden Ansprüche, **dadurch gekennzeichnet, dass** der Schließdruck des Membranventils (26) größer ist als ein Betriebsdruck.

9. Düseneinrichtung nach einem der vorangehenden Ansprüche,
**dadurch gekennzeichnet,**
- **dass** eine dem ersten Kanal (12) zugeordnete Öffnung (16, 18) und eine dem zweiten Kanal (14) zugeordnete Öffnung (22, 24) mit einem Schlauch (36, 66) verbunden sind und
- **dass** der Schlauch (36, 66) zwei Kanäle (38, 40) hat, welche jeweils mit dem ersten Kanal (12) oder dem zweiten Kanal (14) verbunden sind.

10. Düseneinrichtung nach einem der vorangehenden Ansprüche, **dadurch gekennzeichnet, dass** der erste Kanal (12) der Düseneinrichtung (10) mit dem zweiten Kanal (14) der Düseneinrichtung (10) verbunden ist.

11. Düseneinrichtung nach einem der vorangehenden Ansprüche, **dadurch gekennzeichnet, dass** eine dem ersten Kanal (12) zugeordnete Öffnung (16) und eine dem zweiten Kanal (14) zugeordnete Öffnung (22) über eine Abschlusskappe (42) miteinander verbunden sind.

12. Düseneinrichtung nach einem der vorangehenden Ansprüche, **dadurch gekennzeichnet, dass** eine Pumpe vorgesehen ist, mittels welcher mindestens zwei Druckstufen realisierbar sind.

13. Düseneinrichtung nach einem der vorangehenden Ansprüche, **dadurch gekennzeichnet, dass** ein beheizbarer Flüssigkeitsbehälter vorgesehen ist.

14. System mit mehreren Düseneinrichtungen (10) nach einem oder mehreren der vorangehenden Ansprüche.

15. Verfahren zum Betreiben einer Düseneinrichtung (10) mit einem ersten Kanal (12), einer dem ersten Kanal (12) zugeordneten ersten Öffnung (16), einer dem ersten Kanal (12) zugeordneten zweiten Öffnung (18) und einer dem ersten Kanal (12) zugeordneten Spritzöffnung (20), wobei Flüssigkeit durch den ersten Kanal (12) gefördert wird, und wobei die Flüssigkeit weiterhin durch einen zweiten Kanal (14) gefördert wird, welcher eine dritte Öffnung (22) und eine vierte Öffnung (24) aufweist, wobei die Flüssigkeit in der Düseneinrichtung erwärmt wird und während eines Umwälzzyklus beheizte Flüssigkeit zunächst durch einen der Kanäle (12,14) und anschließend durch den anderen Kanal (14,12) geleitet wird und somit zweimal Wärme an die Düseneinrichtung abgibt.

16. Verfahren nach Anspruch 15, **dadurch gekennzeichnet,**
- **dass** die Flüssigkeit in einem ersten Betriebszustand mit einem Betriebsdruck gefördert wird, so dass keine Flüssigkeit aus der Spritzöffnung (20) austritt,
- **dass** die Flüssigkeit in einem zweiten Betriebszustand mit einem Spritzdruck gefördert wird, so dass Flüssigkeit aus der Spritzöffnung (20) austritt.

17. Verfahren nach Anspruch 15 oder 16, **dadurch gekennzeichnet,**
- **dass** die Flüssigkeit durch die vierte Öffnung (24) in den zweiten Kanal (14) eintritt,
- **dass** die Flüssigkeit durch die dritte Öffnung (22) aus dem zweiten Kanal (14) austritt,
- **dass** die Flüssigkeit durch die erste Öffnung (16) in den ersten Kanal (12) eintritt und
- **dass** die Flüssigkeit durch die zweite Öffnung (18) aus dem ersten Kanal (12) austritt.

18. Verfahren nach einem der Ansprüche 15 bis 17, **dadurch gekennzeichnet,**
- **dass** die Flüssigkeit durch die zweite Öffnung (18) in den ersten Kanal (12) eintritt,
- **dass** die Flüssigkeit durch die erste Öffnung (16) aus dem ersten Kanal (12) austritt,
- **dass** die Flüssigkeit durch die dritte Öffnung (22) in den zweiten Kanal (14) eintritt und
- **dass** die Flüssigkeit durch die vierte Öffnung (24) aus dem zweiten Kanal (14) austritt.

19. Verfahren nach einem der Ansprüche 15 bis 18, **dadurch gekennzeichnet, dass** die Flüssigkeit durch eine Abschlusskappe (42) von einem Kanal (12, 14) in den anderen Kanal (12, 14) geleitet wird.

20. Verfahren nach einem der Ansprüche 15 bis 19, **dadurch gekennzeichnet, dass** die Flüssigkeit nach dem Austritt aus einem Kanal (12, 14) durch weitere Komponenten geleitet wird und danach in den anderen Kanal (12, 14) eintritt.

## Claims

1. Nozzle device having
- a first duct (12),
- a first opening (16) assigned to the first duct (12),
- a second opening (18) assigned to the first duct (12),
- a spray opening (20) assigned to the first duct (12),
- a second duct (14),
- with the second duct (14) having a third opening (22) and a fourth opening (24),
- and having at least one heating wire (44, 46),
- wherein during a circulation cycle, a heated liquid is conducted firstly through one of the ducts (12, 14) and subsequently through the other duct (14, 12), and therefore dissipates heat to the nozzle device two times.

2. Nozzle device according to Claim 1, **characterized in that** the spray opening (20) is connected to the first duct (12) by means of a valve (26).

3. Nozzle device according to Claim 1 or 2,
**characterized in that** the valve (26) is a diaphragm valve.

4. Nozzle device according to one of the preceding claims, **characterized in that** the diaphragm (28) of the diaphragm valve is of conical shape.

5. Nozzle device according to one of the preceding claims, **characterized in that** a nozzle body (30) and a nozzle housing (32) can be separated from one another.

6. Nozzle device according to one of the preceding claims, **characterized in that** the nozzle housing (32) has a ventilation opening (34).

7. Nozzle device according to one of the preceding claims, **characterized in that** the opening pressure of the diaphragm valve (26) is greater than an operating pressure.

8. Nozzle device according to one of the preceding claims, **characterized in that** the closing pressure of the diaphragm valve (26) is greater than an operating pressure.

9. Nozzle device according to one of the preceding claims, **characterized**
- **in that** an opening (16, 18) which is assigned to the first duct (12) and an opening (22, 24) which is assigned to the second duct (14) are connected by means of a hose (36, 66), and
- in that the hose (36, 66) has two ducts (38, 40) which are in each case connected to the first duct (12) or the second duct (14).

10. Nozzle device according to one of the preceding claims, **characterized in that** the first duct (12) of the nozzle device (10) is connected to the second duct (14) of the nozzle device (10).

11. Nozzle device according to one of the preceding claims, **characterized in that** an opening (16) which is assigned to the first duct (12) and an opening (22) which is assigned to the second duct (14) are connected to one another by means of a closure cap (42).

12. Nozzle device according to one of the preceding claims, **characterized in that** a pump is provided, by means of which at least two pressure stages can be realized.

13. Nozzle device according to one of the preceding claims, **characterized in that** a heatable liquid tank is provided.

14. System having a plurality of nozzle devices (10) according to one or more of the preceding claims.

15. Method for operating a nozzle device (10) having a first duct (12), a first opening (16) assigned to the first duct (12), a second opening (18) assigned to the first duct (12), and a spray opening (20) assigned to the first duct (12), with liquid being conducted through the first duct (12, and with the liquid additionally being conducted through a second duct (14), which has a third opening (22) and a fourth opening (24), wherein the liquid in the nozzle device is heated and, during a circulation cycle, heated liquid is conducted firstly through one of the ducts (12, 14) and subsequently through the other duct (14, 12), and therefore dissipates heat to the nozzle device two times.

16. Method according to Claim 15, **characterized**
- **in that**, in a first operating state, the liquid is fed with an operating pressure such that no liquid emerges from the spray opening (20),
- **in that**, in a second operating state, the liquid is fed with a spray pressure such that liquid emerges from the spray opening (20).

17. Method according to Claim 15 or 16, **characterized**
- **in that** the liquid enters into the second duct (14) through the fourth opening (24),
- **in that** the liquid exits the second duct (14) through the third opening (22),
- **in that** the liquid enters into the first duct (12) through the first opening (16), and
- **in that** the liquid exits the first duct (12) through the second opening (18).

18. Method according to one of Claims 15 to 17,
**characterized**
- **in that** the liquid enters into the first duct (12) through the second opening (18),
- **in that** the liquid exits the first duct (12) through the first opening (16),
- **in that** the liquid enters into the second duct (14) through the third opening (22), and
- **in that** the liquid exits the second duct (14) through the fourth opening (24).

19. Method according to one of Claims 15 to 18, **characterized in that** the liquid is conducted through a closure cap (42) from one duct (12, 14) into the other duct (12, 14).

20. Method according to one of Claims 15 to 19, **characterized in that** the liquid, after exiting one duct (12, 14), is conducted through further components and then enters into the other duct (12, 14).

## Revendications

1. Installation de buse comprenant :
- un premier canal (12),
- une première ouverture (16) pour le premier canal (12),
- une seconde ouverture (18) pour le premier canal (12),
- un orifice d'éjection (20) associé au premier canal (12),
- un second canal (14),
- le second canal (14) ayant une troisième ouverture (22) et une quatrième ouverture (24),
- et au moins un fil chauffant (44, 46),
- et pendant un cycle de circulation, un liquide chauffé est conduit tout d'abord à travers l'un des canaux (12, 14) et ensuite à travers l'autre canal (14, 12) pour fournir deux fois de la chaleur à l'installation de buse.

2. Installation de buse selon la revendication 1,
**caractérisée en ce que**
l'orifice d'éjection (20) est relié au premier canal (12) par une soupape (26).

3. Installation de buse selon les revendications 1 ou 2,
**caractérisée en ce que**
la soupape (26) est une soupape à membrane.

4. Installation de buse selon l'une des revendications précédentes,
**caractérisée en ce que**
la membrane (26) de la soupape à membrane est de forme conique.

5. Installation de buse selon l'une des revendications précédentes,
**caractérisée en ce qu'**
le corps de buse (30) et le boîtier de buse (32) sont séparables.

6. Installation de buse selon l'une quelconque des revendications,
**caractérisée en ce que**
le boîtier de buse (32) comporte un orifice d'évacuation d'air (34).

7. Installation de buse selon l'une quelconque des revendications,
**caractérisée en ce que**
la pression d'ouverture de la soupape à membrane (26) est supérieure à la pression de fonctionnement.

8. Installation de buse selon l'une quelconque des revendications,
**caractérisée en ce que**
la pression de fermeture de la soupape à membrane (26) est supérieure à la pression de fonctionnement.

9. Installation de buse selon l'une quelconque des revendications,
**caractérisée en ce qu'**
- une première ouverture (16, 18) associée au premier canal (12) et une seconde ouverture (22, 24) associée au second canal (14) sont reliées par un tuyau (36, 66) et
- le tuyau (36, 66) comporte deux canaux (38, 40) reliés respectivement au premier canal (12) ou au second canal (14).

10. Installation de buse selon l'une quelconque des revendications,
**caractérisée en ce que**
le premier canal (12) de l'installation de buse (10) est relié au second canal (14) de l'installation de buse (10).

11. Installation de buse selon l'une quelconque des revendications,
**caractérisée par**
une ouverture (16) associée au premier canal (12) et une ouverture (22) associée au second canal (14) reliés par un capuchon de fermeture (42).

12. Installation de buse selon l'une quelconque des revendications,
**caractérisée par**
une pompe qui fournit au moins deux niveaux de pression.

13. Installation de buse selon l'une quelconque des revendications,
**caractérisée par**
un réservoir de liquide chauffé.

14. Système à plusieurs installations de buse (10) selon l'une ou plusieurs des revendications précédentes.

15. Procédé de chauffage d'une installation de buse (10) comprenant un premier canal (12), une première ouverture (16) associée au premier canal (12), une seconde ouverture (18) associée au premier canal (12) et un orifice d'éjection (20) associé au premier canal (12), du liquide étant refoulé à travers le premier canal (12) et le liquide est en outre refoulé à travers un second canal (14) comportant une troisième ouverture (22) et une quatrième ouverture (24),
le liquide étant chauffé dans l'installation de buse et au cours d'un cycle de circulation, le liquide chauffé est tout d'abord conduit à travers l'un des canaux (12, 14) et ensuite à travers l'autre canal (14, 12) pour échanger ainsi deux fois de la chaleur avec l'installation de buse.

16. Procédé selon la revendication 15,
**caractérisé en ce que**
- dans un premier état de fonctionnement, le liquide est refoulé selon une pression de fonctionnement pour que le liquide ne sorte pas de l'orifice d'éjection (20),
- et dans un second état de fonctionnement, le liquide est refoulé avec une pression d'éjection pour sortir de l'orifice d'éjection (20).

17. Procédé selon la revendication 15 ou 16,
**caractérisé en ce que**
- le liquide arrive dans le second canal (14) par la quatrième ouverture (24),
- le liquide sort du second canal (14) par la troisième ouverture (22),
- le liquide pénètre dans le premier canal (12) par la première ouverture (16), et
- le liquide sort du premier canal (12) par la seconde ouverture (18).

18. Procédé selon l'une des revendications 15 à 17,
**caractérisé en ce que**
- le liquide entre dans le premier canal (12) par la seconde ouverture (18),
- le liquide sort du premier canal (12) par la première ouverture (16),
- le liquide entre dans le second canal (14) par la troisième ouverture (22), et
- le liquide sort du second canal (14) par la quatrième ouverture (24).

19. Procédé selon l'une des revendications 15 à 18,
**caractérisé en ce que**
le liquide est conduit à travers un capuchon de fermeture (42) du premier canal (12, 14) dans un autre canal (12, 14).

20. Procédé selon l'une des revendications 15 à 19,
**caractérisé en ce qu'**
après la sortie d'un canal (12, 14), le liquide est guidé à travers d'autres composants pour entrer ensuite dans l'autre canal (12, 14).
